# EUROPÄISCHE PATENTSCHRIFT

(11) **EP 1 656 046 B1**
(45) Veröffentlichungstag und Bekanntmachung des Hinweises auf die Patenterteilung: **18.11.2009**
(21) Anmeldenummer: 04738077.9
(22) Anmeldetag: 09.07.2004
(51) Int. Cl.: A45B 23/00, F16C 11/10

(54) **AN EINEM TRÄGER VERSCHWENKBAR ANGEORDNETER AUSLEGER FÜR EINEN FREIARMSCHIRM**
EXTENSION ARM FOR A FREE ARM PARASOL, PIVOTABLY ARRANGED ON A CARRIER
BRAS POUR UN PARASOL A BRAS LIBRE, FIXE A UN MAT DE FACON PIVOTANTE

(30) Priorität: 22.08.2003 CH 143103
(43) Veröffentlichungstag der Anmeldung: 17.05.2006
(73) Patentinhaber: GLATZ AG, CH-8500 Frauenfeld (CH)
(72) Erfinder: GLATZ, Gustav Adolf, CH-8500 Frauenfeld (CH)
(74) Vertreter: Schmauder, Klaus Dieter
(86) Internationale Anmeldenummer: PCT/CH2004/000436
(87) Internationale Veröffentlichungsnummer: WO 2005/018369

(56) Entgegenhaltungen:
- EP-A- 0 050 079
- EP-A- 0 877 174
- WO-A-01/52686
- US-B1- 6 588 438

## Beschreibung

### Technisches Gebiet

Die Erfindung betrifft einen an einem Träger um seine Achse verschwenkbar angeordneten Ausleger für einen Freiarmschirm gemäss Oberbegriff des Anspruchs 1.

### Stand der Technik

Ein an einem Träger um seine Achse verschwenkbar angeordneter Ausleger der eingangs genannten Art ist beispielsweise aus der WO 01/52686 bekannt, bei dem der Ausleger als ausfahrbarer Freiarm und der Träger als Mast eines Freiarmschirmes ausgestaltet sind. Zur optimalen Schattenausnützung bei wechselndem Sonnenstand kann nicht nur der Mast um seine eigene Achse gedreht werden, sondern insbesondere kann auch der Ausleger um seine Achse geschwenkt werden, so dass der Schirm in eine entsprechende Schräglage gebracht und dort arretiert werden kann. Hierzu ist eine Lenkstange gelenkig an einer Hülse angebracht, die um den Ausleger schwenkbar angeordnet und mittels einer Rastvorrichtung in verschiedenen Schwenklagen am Ausleger verrastbar ist. Zur Verrastung dient ein in der Hülse radial verschiebbar gelagerter Rastbolzen, der mittels einer Feder gegen den Ausleger vorgespannt und in verschiedene Öffnungen im Ausleger einrastbar ist. Zum Lösen des Rastbolzens ist in der Lenkstange ein Zugorgan angeordnet, das mit dem Rastbolzen verbunden ist und an einem Handteil der Lenkstange mittels eines Handgriffes betätigbar ist. Dabei ist es nachteilig, dass einerseits die mögliche Anzahl der Schwenkwinkel der Lenkstange am Ausleger begrenzt ist. Andererseits sind bei der Betätigung des Handhebels zum Ausrasten des Rastbolzens durch radiales Ziehen am Handriff und zum Verschwenken der Lenkstange stets zwei Handgriffe erforderlich. Bei gelöster Rastvorrichtung ist die Lenkstange um den Ausleger verschwenkbar, worauf die geänderte Winkellage am Ausleger durch Betätigung der Rastvorrichtung arretiert werden kann. Durch Zurückschwenken der verrasteten Lenkstange gegen den Träger und dessen Arretierung am Träger ist der Ausleger in der geschwenkten Stellung gesichert.

### Darstellung der Erfindung

Aufgabe der Erfindung ist es, einen an einem Träger um seine Achse verschwenkbar angeordneten Ausleger für einen Freiarmschirm so auszugestalten, dass das Verschwenken und Arretieren des Auslegers über ein einziges Bedienungselement durch vereinfachte Bewegungen mit einer Hand möglich sind.

Gelöst wird diese Aufgabe durch die kennzeichnenden Merkmale des Anspruches 1. Dadurch, dass ein mit dem Ausleger fest verbundener erster Kupplungsteil mit einem an der Hülse ausgebildeten und in axialer Richtung wirksamen zweiten Kupplungsteil zusammenwirkt, wobei die Lenkstange ein Stützglied aufweist, das mit einem am Ausleger angeordneten Gegenstück zusammenwirkt, kann der zweite Kupplungsteil mittels der Lenkstange in axialer Richtung verschoben werden und dabei das Kuppeln und Entkuppeln auslösen, ohne dass zusätzliche Organe zu betätigen sind. Mittels der Lenkstange kann die Hülse im entkuppelten Zustand frei um den Ausleger geschwenkt werden und im gekuppelten Zustand kann der Ausleger mittels der gleichen Lenkstange verschwenkt werden.

Vorteilhafte Ausgestaltungen des Auslegers sind in den Ansprüchen 2 bis 18 beschrieben.

Eine besonders einfache Ausgestaltung der Lenkstange beschreibt Anspruch 2, wonach die Lenkstange ein gabelartiges Stützglied aufweist und mit diesem am zweiten Kupplungsteil über zwei Lagerbolzen angelenkt ist.

Die Kupplung kann verschiedenartig ausgestaltet sein. Bevorzugt ist die Ausbildung nach Anspruch 3, wonach die Kupplung als Zahnkupplung ausgebildet ist. Im einfachsten Fall können mindestens ein Zahnelement im einen Kupplungsteil und zwei Ausnehmungen im zugeordneten Kupplungsteil angeordnet sein. Vorzugsweise weisen jedoch beide eine grössere Anzahl von Zähnen auf, die ineinander greifen können. Je grösser die Zahnteilung ist, umso feiner ist der einstellbare Neigungswinkel des Auslegers. Die Zahnkupplung bildet auch eine formschlüssige Kupplung, die ein ungewolltes Verschwenken des Auslegers verhindert. Eine besonders feine Einstellung des Drehwinkels des Auslegers erlaubt die Ausgestaltung nach Anspruch 4, wonach die Kupplung als Reibkupplung ausgestaltet ist. Die kraftschlüssige Reibkupplung erfordert eine ausreichende Vorspannung der Kupplungsteile gegeneinander um ein ungewolltes Verstellen des Drehwinkels des Auslegers zu verhindern. Der erste Kupplungsteil kann gemäss Anspruch 5 direkt oder indirekt mit dem Ausleger verbunden sein.

Um Verletzungen zu vermeiden, ist es zweckmässig, wenn gemäss Anspruch 6 einer der Kupplungsteile einen den Kupplungsbereich und/oder Federbereich umschliessenden Hülsenteil aufweist, sodass ein ungewolltes Eingreifen einer Bedienungsperson in den Kupplungsbereich und/oder Federbereich verhindert wird.

Gemäss Anspruch 7 ist der Ausleger um seine Achse drehbar an einem Tragglied angeordnet und das Tragglied ist seinerseits über ein Gelenk mit einem Schlitten verbunden, der längs des Trägers verfahr und arretierbar ist. Dabei ist das Gelenk vorzugsweise als Bolzengelenk ausgestaltet, das ein Verschwenken des Auslegers um den Träger verhindert.

Für die Ausbildung des Stützgliedes ergeben sich ebenfalls verschiedene Möglichkeiten. Gemäss Anspruch 8 kann das Stützglied an einem oberen Arm der Lenkstange angeordnet sein und eine Anschlagnase aufweisen oder gemäss Anspruch 9 als ein- oder beidseitiger Exzenter ausgebildet sein. Die Anschlagnase, respektive der ein- oder beidseitige Exzenter steht mit dem Gegenstück am Ausleger gleitend in Verbindung, wobei der zweite Kupplungsteil mittels einer Vorspannfeder gegen den ersten Kupplungsteil vorgespannt ist. Die Vorspannfeder ist gemäss Anspruch 10 vorzugsweise im Inneren des hülsenartigen zweiten Kupplungsteiles angeordnet und stützt sich am einen Ende am Kupplungsteil und am anderen Ende am Ausleger ab. Die Anordnung der Vorspannfeder im hülsenartigen zweiten Kupplungsteil verhindert Unfälle.

Der Anspruch 11 beschreibt eine weitere Ausgestaltung des Stützgliedes, wonach an einem oberen Arm der Lenkstange ein Gelenk angeordnet ist, das mit einem Gegenstück verbunden ist, welches um die Auslegerachse verschwenkbar angeordnet ist. Bei dieser formschlüssigen Verbindung kann auf eine Vorspannfeder verzichtet werden, denn das Ein- und Auskuppeln der Kupplungsteile wird durch Betätigung der Lenkstange in beiden Richtungen ermöglicht.

Gemäss Anspruch 12 weist die Lenkstange an ihrem unteren Abschnitt eine Arretiervorrichtung auf, mittels derer die Lenkstange am Träger arretierbar ist. Gemäss Anspruch 13 kann das Arretierglied als federnder Arretierclip ausgestaltet sein. Dabei ist es von Vorteil, wenn der Arretierclip gemäss Anspruch 14 gelenkig mit der Lenkstange verbunden ist, um sich Lageänderungen beim Verschieben längs des Trägers anpassen zu können. Besonders vorteilhaft ist es, wenn das Arretierglied gemäss Anspruch 15 als Arretiernase ausgestaltet ist, die in einen am Mast angeordneten Längsschlitz eingreift. Dabei ist es von Vorteil, wenn gemäss Anspruch 16 die Arretiernase aus zwei mit Abstand angeordneten Nasenteilen besteht, die an Seitenteilen des Längsschlitzes arretierend eingreifen. Hierzu ist es von Vorteil, wenn die Nasenteile gemäss Anspruch 17 federnd sind. Besonders vorteilhaft ist es, wenn die Nasenteile gemäss Anspruch 18 mittels eines Sperrschiebers gegen Ausrasten aus dem Längsschlitz gesichert sind. Dabei kann die Anordnung dennoch so getroffen werden, dass ein Verfahren des Traggliedes längs des Trägers auch bei verrastetem Arretierclip möglich ist.

Besonders vorteilhaft ist es, wenn der Ausleger als ausfahrbarer Freiarm und der Träger als Mast eines Freiarmschirmes ausgestaltet sind, so wie dies in den EP- 0 741 531, 0 830 074 und WO 01/52686 beschrieben ist.

### Kurze Beschreibung der Zeichnungen

Ausführungsbeispiele der Erfindung werden nachfolgend anhand der Zeichnungen näher beschrieben, dabei zeigen:
- Figur 1: den Freiarmschirm in geschlossener Stellung;
- Figur 2: den Freiarmschirm in geöffneter Stellung;
- Figur 3: die Lenkstangen-Anordnung des Freiarmschirmes der Figur 2 im Ausschnitt und im grösseren Massstab;
- Figur 4: die Lenkstangen-Anordnung der Figur 3 im Ausschnitt und im grösseren Massstab;
- Figur 5: die Lenkstangen-Anordnung der Figur 4 im Längsschnitt und im grösseren Massstab;
- Figur 6: ein weiteres Ausführungsbeispiel der Abstützung des Auslegers am Mast, im Längsschnitt;
- Figur 7: ein am Mast verrastetes Arretierglied mit Arretiernasen, im Horizontalschnitt;
- Figur 8: das am Mast verrastete Arretierglied aus Figur 7, im Vertikalschnitt;
- Figur 9: ein am Mast verrastetes, mit einem den Mast umgreifenden Arretierclip, im Querschnitt.

### Wege zur Ausführung der Erfindung und gewerbliche Anwendbarkeit

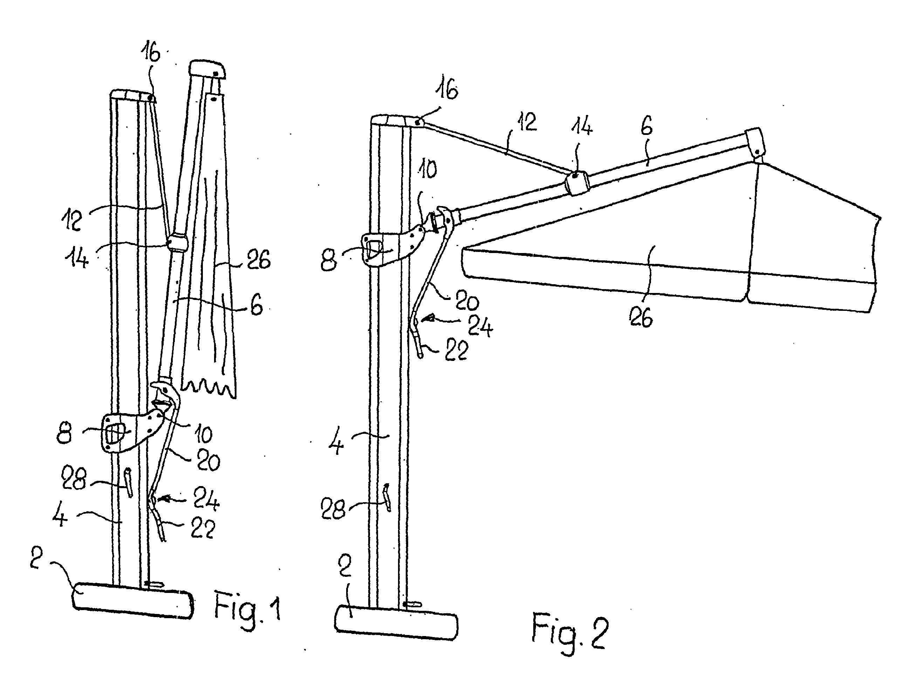

Abgesehen von der besonderen Ausgestaltung der Verschwenkbarkeit des Auslegers kann der in den Figuren 1 bis 5 dargestellte Freiarmschirm entsprechend der WO 01/52686 ausgestaltet sein.

Der in den Figuren 1 bis 5 dargestellte Freiarmschirm weist einen beispielsweise in einem Sockel 2 verankerten Mast 4 auf, der als Träger für einen ausfahrbaren Ausleger 6 dient. Dieser ist an einem längs des Mastes verfahrbaren Schlitten 8 über ein Gelenk 10 angeordnet. Der Ausleger 6 stützt sich über einen Verbindungsstab 12 am oberen Ende des Mastes ab. Hierzu ist der Verbindungsstab 12 einerseits über ein Gelenk 14 zwischen den beiden Enden des Auslegers 6 mit diesem verbunden und andererseits über ein weiteres Gelenk 16 mit dem oberen Ende des Mastes. Das Verschwenken des Auslegers 6 um seine Achse 18 wird mit Hilfe einer Lenkstange 20 ausgeführt. Diese weist an ihrem unteren Bereich einen Handgriff 22 und eine Arretiervorrichtung 24 auf, wobei letztere zur Arretierung der Lenkstange 20 am Mast 4 und damit zum Halten des Auslegers 6 in der gewählten Schwenklage dient.

Am Ende des Auslegers ist ein Schirmdach 26 angeordnet, das bei eingeholtem Ausleger geschlossen ist, wie in Figur 1 gezeigt und bei ausgefahrenem Ausleger geöffnet werden kann, wie sich aus Figur 2 ergibt. Das Verfahren des Schlittens 8 entlang des Mastes 4 zum Öffnen und Schliessen des Schirmdaches erfolgt durch Bedienen einer Kurbel 28. Für das Öffnen und Schliessen des Schirmdaches ergeben sich ebenfalls verschiedene Möglichkeiten, von denen bevorzugte aus den EP- 0 741 531 bzw. 0 830 074 entnommen werden können.

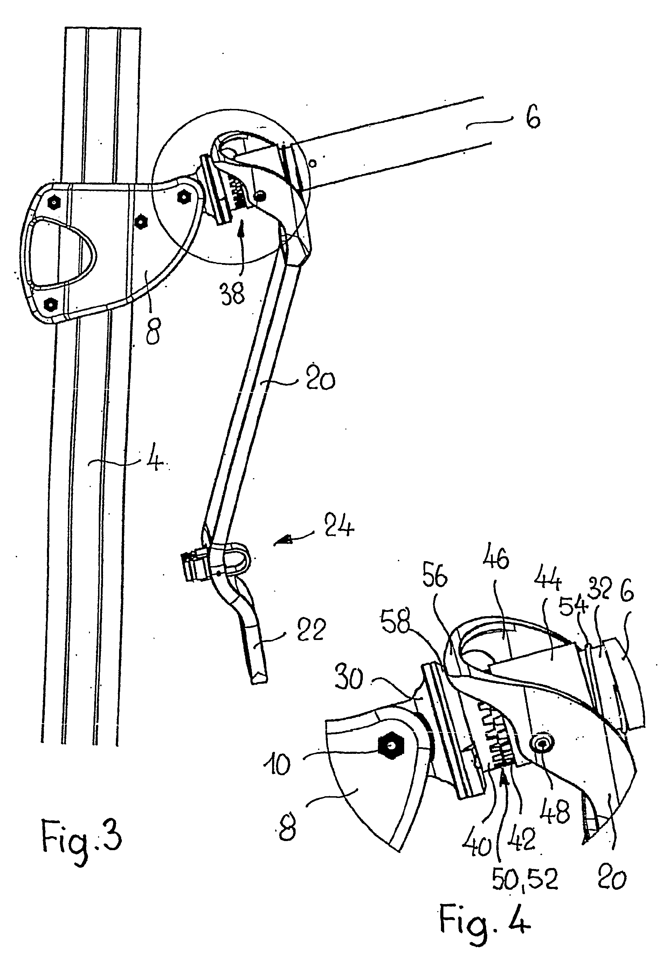

Einzelheiten bezüglich der Anordnung des Auslegers 6 am Mast 4 und bezüglich des Verschwenkens des Auslegers um seine Achse 18 und der hierzu verwendeten Bauteile ergeben sich insbesondere aus Figuren 3 bis 5.

Der Ausleger 6 ist um seine Achse 18 verschwenkbar an einem Tragglied 30 angeordnet, das seinerseits über das Gelenk 10, welches als Bolzengelenk ausgebildet ist, mit dem Schlitten 8 verbunden ist. Der rohrförmige Ausleger 6 ist mit einer Gleithülse 32 versehen, die auf einem Stutzen 34 des Traggliedes 30 drehbar angeordnet ist. Die Gleithülse 32 ist über eine Kupplung 38 mit der Lenkstange 20 verbunden. Hierzu weist die Gleithülse 32 einen ersten Kupplungsteil 40 auf, der mit einem zweiten Kupplungsteil 42 zusammenwirkt, der an einer Kupplungshülse 44 angeordnet ist, welche drehbar auf der Gleithülse 32 gelagert ist. An der Kupplungshülse ist die Lenkstange 20 mit einem gabelförmigen Teil 46 mittels Lagerbolzen 48 verschwenkbar befestigt. Der erste Kupplungsteil 40 weist eine Verzahnung 50 auf, die mit der Verzahnung 52 des zweiten Kupplungsteils 42 zusammenwirkt. Eine Vorspannfeder 54 liegt innerhalb der Kupplungshülse und stützt sich einerseits an der Kupplungshülse und andererseits am rohrförmigen Ausleger 6 ab und spannt den zweiten Kupplungsteil 42 gegen den ersten Kupplungsteil 40 vor. Dadurch ist die Lenkstange 20 drehfest mit dem Ausleger 6 verbunden, so dass der Ausleger 6 Schwenkbewegungen der Lenkstange 20 mitmacht. Die Lagearretierung des Auslegers 6 bezüglich seiner Schwenklage erfolgt über die Lenkstange 20, die mittels der Arretiervorrichtung 24 am Mast 4 arretiert ist. Zum Lösen der Kupplung 38 weist die Lenkstange 20 am oberen Ende ein Stützglied 56 auf, das in Form eines Bogens ausgebildet ist, welcher den gabelartigen Teil 46 der Lenkstange verbindet. Das Stützglied 56 stützt sich nach dem Lösen der Arretiervorrichtung 24 und Ausschwenken der Lenkstange 20 um die Lagerbolzen 48 auf einem Gleitring 58 ab, sodass bei fortschreitendem Ausschwenken der Lenkstange 20 der zweite Kupplungsteil 42 entgegen der Vorspannkraft der Vorspannfeder 54 mit dem ersten Kupplungsteil 40 ausser Eingriff gebracht werden kann. Im entkuppelten Zustand kann die Lenkstange 20 mittels der Kupplungshülse 44 um den Ausleger um einen Winkel verschwenkt werden, um den der Ausleger und damit der Schirm um die Achse 18 geschwenkt werden soll. In der gewünschten Stellung wird durch Zurückschwenken der Lenkstange 20 gegen den Mast 4 der zweite Kupplungsteil 42 mit dem ersten Kupplungsteil 40 wieder in Eingriff gebracht, sodass der Ausleger 6 mittels der Lenkstange 20 um den Stutzen 34 des Traggliedes 30 geschwenkt werden kann. Zur Arretierung der gewünschten Schwenklage wird die Lenkstange 20 über die Arretiervorrichtung 24 wieder mit dem Mast 4 verbunden, sodass die Schwenklage des Auslegers und damit des Schirmes gesichert ist.

Zur Verhütung von Unfällen ist die Kupplungshülse mit einer ersten Schürze 60 versehen, welche die Verzahnung 50, 52 übergreift. Eine zweite Schürze 62 überdeckt die Vorspannfeder 54.

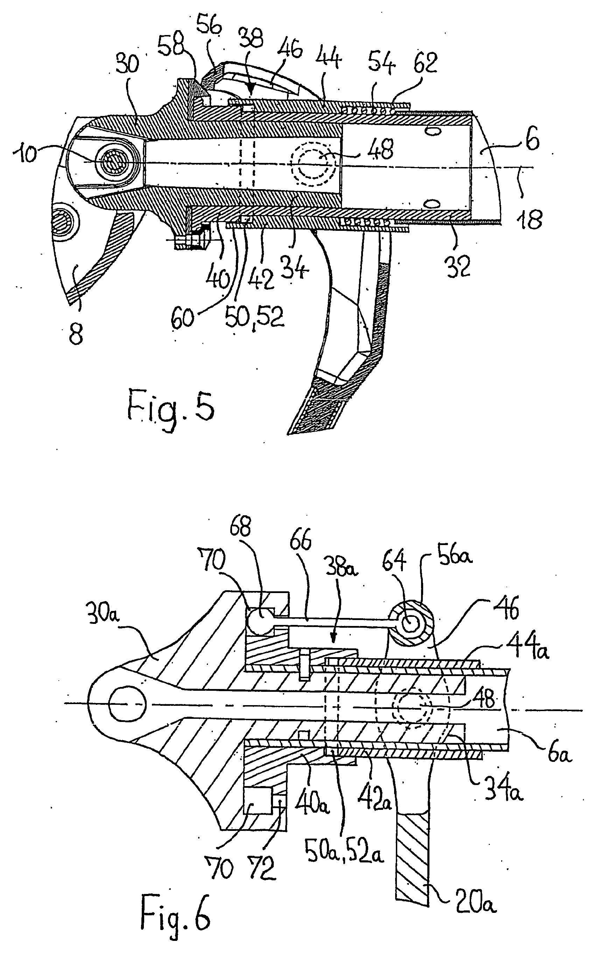

Die Figur 6 beschreibt eine weitere Ausführungsvariante des Traggliedes 30a und seiner Verbindung mit der Lenkstange 20a. Der Ausleger 6a ist wiederum mit einem Stutzen 34a des Traggliedes 30a drehbar verbunden und weist einen ersten Kupplungsteil 40a auf, letzterer steht mit einem zweiten Kupplungsteil 42a in Verbindung, der an einer Kupplungshülse 44a angeordnet ist, die um den Ausleger 6a verschwenkbar ist. An dieser Kupplungshülse ist wiederum die Lenkstange 20a drehbar befestigt. Die Lenkstange 20a ist am oberen Ende mit einem Stützglied 56a versehen, das über ein Gelenk 64 mit einem Gegenstück 66 verbunden ist. Letzteres ist als Koppelglied ausgebildet, das über einen Kugelkopf 68 in einer umlaufenden Nut 70 und einem Zugangsschlitz 72 verfahrbar ist, um der Schwenkbewegung der Lenkstange 20a zu folgen. Durch die feste gelenkige Verbindung zwischen dem oberen Stützglied 56a und dem Tragglied 30a kann die Lenkstange 20a sowohl zum Einkuppeln wie zum Auskuppeln der Verzahnung 50a,52a zwischen dem ersten Kupplungsteil 40a und dem zweiten Kupplungsteil 42a verwendet werden. Eine Vorspannfeder zum Halten der Kupplung im geschlossenen Zustand ist bei dieser Ausführungsvariante nicht erforderlich, könnte aber zusätzlich installiert sein. Diese Ausführungsvariante gemäss Figur 6 funktioniert analog der Ausführungsvariante der Figur 5.

Es ist auch denkbar die Zahn-Kupplungen 38,38a der Figuren 5 und 6 durch ReibKupplungen zu ersetzen, da diese den Vorteil eines stufenlosen Verschwenkens des Auslegers um seine Achse bieten. Bei dieser Ausführungsvariante steht der erste Kupplungsteil mit dem zweiten Kupplungsteil über Reibflächen in Eingriff. Die Reibflächen können dabei als Kupplungsscheiben oder Kupplungskonen ausgebildet sein.

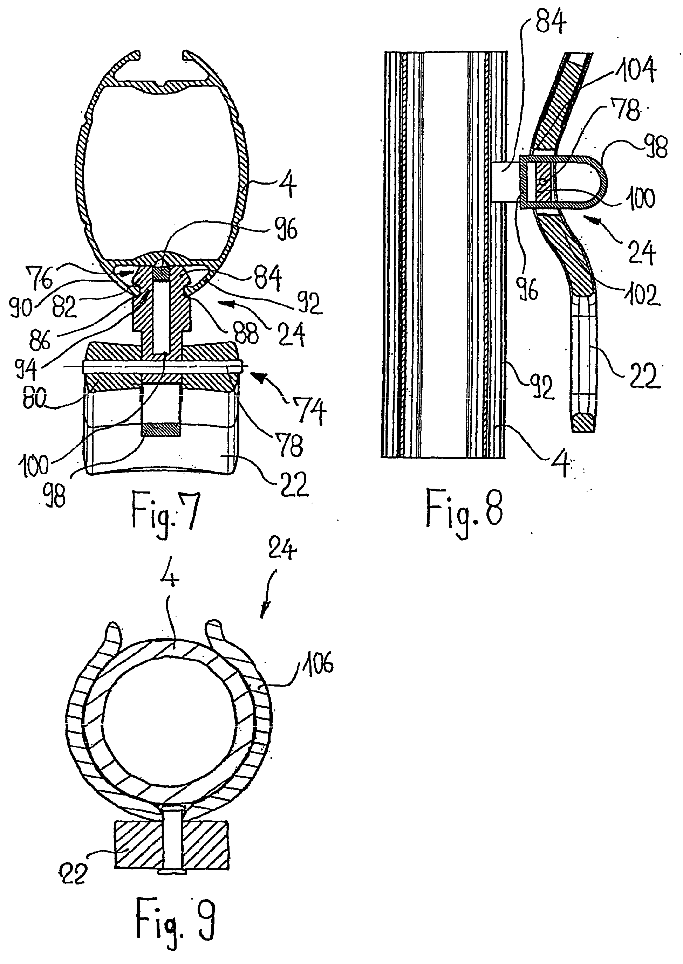

Die Figuren 7 und 8 zeigen im Horizontal- und Vertikalschnitt eine bevorzugte Ausführungsform der Arretiervorrichtung 24, wie sie beim ersten Ausführungsbeispiel zur Anwendung gelangt. Die Arretiervorrichtung enthält eine über ein Gelenk 74 verschwenkbare mit dem Handgriff 22 verbundene Arretiernase 76, wobei die gelenkige Verbindung zwischen Handgriff 22 und Arretiernase 76 durch einen Gelenkbolzen 78 ausgebildet ist. Die Arretiernase 76 ist in einer Ausnehmung 80 des Handgriffs 22 angeordnet. Die Arretiernase 76 ist aus zwei federnden Nasenteilen 82,84 gebildet, die mit Abstand voneinander angeordnet sind. Auf den aussen liegenden Seiten der Nasenteile 82, 84 sind Rastnuten 86,88 angeordnet, die im verrasteten Zustand mit Seitenteilen 90,92 eines Längsschlitzes 94 im Mast 4 zusammenwirken. Um ein ungewolltes Ausrasten der zwar federnd ausgebildeten Nasenteile 82,84 zu verhindern, ist ein Sperrschieber 96 vorhanden, welcher in den Spalt zwischen den Nasenteilen 82,84 einschiebbar ist. Der Sperrschieber 96 enthält einen Handbügel 98, mit dem er betätigbar ist. Beim Ziehen des Handbügels 98 verfährt der Sperrschieber 96 gegen einen an der Arretiernase 76 ausgebildeten Anschlag 100, womit die Lenkstange 20 aus ihrer Verrastung entnommen werden kann.

Das Verschwenken der Arretiernase 76 ist durch Anschläge 102,104 der Ausnehmung 80 begrenzt. Die gelenkige Anordnung der Arretiernase 76 am Handgriff 22 ist nötig, damit die Arretiernase 76 beim Verfahren des Schlittens 8 im arretierten Zustand oder beim Arretieren selbst ändernde Winkellagen des Handgriffes 22 kompensieren kann und somit bezüglich des Längsschlitzes 94 des Mastes 4 für allen Lagepositionen des Handgriffes 22 ausrichtbar ist.

Die Figur 9 zeigt eine abgewandelte Arretiervorrichtung 24, welche ein als Arretierclip 106 ausgebildetes Arretierglied aufweist, der am Handgriff 22 befestigt ist und im arretierten Zustand den Mast 4 mindestens teils umgreift.

### Bezugszeichenliste

- 2: Sockel
- 4: Mast
- 6: Ausleger
- 6a: Ausleger
- 8: Schlitten
- 10: Gelenk
- 12: Verbindungsstab
- 14: Gelenk
- 16: Gelenk
- 18: Achse
- 20: Lenkstange
- 20a: Lenkstange
- 22: Handgriff
- 24: Arretiervorrichtung
- 26: Schirmdach
- 28: Kurbel
- 30: Tragglied
- 30a: Tragglied
- 32: Gleithülse
- 34: Stutzen
- 34a: Stutzen
- 38: Kupplung
- 38a: Kupplung
- 40: erster Kupplungsteil
- 40a: erster Kupplungsteil
- 42: zweiter Kupplungsteil
- 42a: zweiter Kupplungsteil
- 44: Kupplungshülse
- 44a: Kupplungshülse
- 46: Gabelteil
- 48: Lagerbolzen
- 50: Verzahnung
- 50a: Verzahnung
- 52: Verzahnung
- 52a: Verzahnung
- 54: Vorspannfeder
- 56: Stützglied
- 56a: Stützglied
- 58: Gleitring
- 60: erste Schürze
- 62: zweite Schürze
- 64: Gelenk
- 66: Gegenstück
- 68: Kugelkopf
- 70: Nut
- 72: Zugangsschlitz
- 74: Gelenk
- 76: Arretiernase
- 78: Gelenkbolzen
- 80: Ausnehmung
- 82: Nasenteil
- 84: Nasenteil
- 86: Rastnut
- 88: Rastnut
- 90: Seitenteil
- 92: Seitenteil
- 94: Längsschlitz
- 96: Sperrschieber
- 98: Handbügel
- 100: Anschlag
- 102: unterer Anschlag
- 104: oberer Anschlag
- 106: Arretierclip

## Patentansprüche

1. An einem Träger (4) um seine Achse (18) verschwenkbar angeordneter Ausleger (6,6a) für einen Freiarmschirm, wobei der Ausleger mittels einer Lenkstange (20,20a) verschwenkbar und in der Schwenklage arretierbar ist, wobei die Lenkstange an einer um den Ausleger verschwenkbaren Hülse (44,44a) angeordnet ist und einerseits in verschiedenen Drehwinkeistellungen mit dem Ausleger (6,6a) verrastbar und andererseits direkt oder indirekt am Träger (4) arretierbar ist, **dadurch gekennzeichnet, dass** ein erster Kupplungsteil (40,40a,) fest mit dem Ausleger verbunden ist und mit einem an der Hülse (44,44a) ausgebildeten und in axialer Richtung wirksamen zweiten Kupplungsteil (42,42a) zusammenwirkt, wobei die Lenkstange (20,20a) ein Stützglied (56,56a) aufweist, das mit einem am Ausleger (6,6a) angeordneten Gegenstück (58,66) zusammenwirkt, um den zweiten Kupplungsteil (42,42a) mittels der Lenkstange (20,20a) in axialer Richtung zu verschieben.

2. Ausleger nach Anspruch 1, **dadurch gekennzeichnet, dass** die Lenkstange (20,20a) einen gabelartigen Teil (46) aufweist und mit diesem am zweiten Kupplungsteil (42,42a) über zwei Lagerbolzen (48) angelenkt ist.

3. Ausleger nach einem der Ansprüche 1 oder 2, **dadurch gekennzeichnet, dass** die Kupplung (38,38a) als Zahnkupplung ausgestaltet ist, wobei diese mindestens ein Zahnelement im einen Kupplungsteil (40,40a) und mindestens zwei Ausnehmungen im entgegenstehenden Kupplungsteil (42,42a) aufweist.

4. Ausleger nach einem der Ansprüche 1 oder 2, **dadurch gekennzeichnet, dass** die Kupplung (38) als Reibkupplung ausgestaltet ist.

5. Ausleger nach einem der Ansprüche 1 bis 4, **dadurch gekennzeichnet, dass** der erste Kupplungsteil (40,40a) mit dem Ausleger (6,6a) direkt oder indirekt verbunden ist.

6. Ausleger nach einem der Ansprüche 1 bis 5, **dadurch gekennzeichnet, dass** einer der Kupplungsteile (40,40a,42,42a) einen den Kupplungsbereich und/oder einen Federbereich umschliessenden Hülsenteil (60,62) aufweist.

7. Ausleger nach einem der Ansprüche 1 bis 6, **dadurch gekennzeichnet, dass** der Ausleger (6,6a) um seine Achse (18) drehbar an einem Tragglied (30,30a) angeordnet ist und das Tragglied über ein Gelenk (10) mit einem Schlitten (8) verbunden ist, der längs des Trägers (4) verfahr- und arretierbar ist.

8. Ausleger nach einem der Ansprüche 1 bis 7, **dadurch gekennzeichnet, dass** das Stützglied (56,56a) an einem oberen Arm der Lenkstange (20,20a) angeordnet ist und eine Anschlagnase aufweist, die mit dem Gegenstück (58,58a) am Ausleger (6,6a) gleitend in Verbindung steht, wobei der zweite Kupplungsteil (42,42a) mittels einer Vorspannfeder (54,54a) gegen den ersten Kupplungsteil (40,40a) vorgespannt ist.

9. Ausleger nach Anspruch 8, **dadurch gekennzeichnet, dass** das Stützglied (56) als ein- oder zweiseitiger Exzenter ausgebildet ist.

10. Ausleger nach Anspruch 9, **dadurch gekennzeichnet, dass** die Vorspannfeder (54) im Inneren des hülsenartigen zweiten Kupplungsteils (42) angeordnet ist und sich am einen Ende am Kupplungsteil (42) und am anderen Ende am Ausleger (6) abstützt.

11. Ausleger nach einem der Ansprüche 1 bis 8, **dadurch gekennzeichnet, dass** das Stützglied (56a) an einem oberen Arm der Lenkstange (20a) angeordnet und über ein Gelenk (64) mit dem Gegenstück (66) verbunden ist, welches um die Auslegerachse (18) verschwenkbar angeordnet ist.

12. Ausleger nach einem der Ansprüche 1 bis 11, **dadurch gekennzeichnet, dass** die Lenkstange (20,20a) in ihrem unteren Abschnitt eine Arretiervorrichtung (24) aufweist und mittels eines Arretiergliedes (76,106) am vorzugsweise als Mast ausgebildeten Träger (4) arretierbar ist.

13. Ausleger nach Anspruch 12, **dadurch gekennzeichnet, dass** das Arretierglied (106) als federnder Arretierclip ausgestaltet ist.

14. Ausleger nach Anspruch 12 oder 13, **dadurch gekennzeichnet, dass** das Arretierglied (76,106) mit der Lenkstange (20,20a) gelenkig verbunden ist.

15. Ausleger nach Anspruch 12, **dadurch gekennzeichnet, dass** das Arretierglied (76) als Arretiernase (76) ausgebildet ist, die in einen am Mast (4) angeordneten Längsschlitz (94) eingreift.

16. Ausleger nach Anspruch 15, **dadurch gekennzeichnet, dass** die Arretiernase (76) zwei mit Abstand angeordnete Nasenteile (82,84) aufweist, die an Seitenteilen (90,92) des Längsschlitzes (94) arretierend eingreifen.

17. Ausleger nach Anspruch 16, **dadurch gekennzeichnet, dass** die Nasenteile (82,84) federnd sind.

18. Ausleger nach einem der Ansprüche 16 oder 17, **dadurch gekennzeichnet, dass** die Nasenteile (82,84) mittels eines einsetzbaren Sperrschiebers (96) gegen Ausrasten aus dem Längsschlitz (94) sicherbar sind.

## Claims

1. An extension arm (6, 6a) for a free arm parasol, pivotably arranged about its axis (18) on a carrier (4), the extension arm being pivotable by means of a guide rod (20, 20a) and being retainable in the pivoted position, the guide rod being arranged on a sleeve (44, 44a), which is pivotable about the extension arm, and, on the one hand, being latchable into different rotational angle positions with the extension arm (6, 6a) and, on the other hand, being retainable directly or indirectly on the carrier (4), **characterized in that** a first coupling part (40, 40a) is connected fixedly to the extension arm and interacts with a second coupling part (42, 42a), which is formed on the sleeve (44, 44a) and is effective in the axial direction, the guide rod (20, 20a) having a supporting element (56, 56a) which interacts with a counterpart (58, 66) arranged on the extension arm (6, 6a), in order to displace the second coupling part (42, 42a) in the axial direction by means of the guide rod (20, 20a).

2. The extension arm as claimed in claim 1, **characterized in that** the guide rod (20, 20a) has a fork-like part (46) and is coupled with the latter to the second coupling part (42, 42a) via two bearing bolts (48).

3. The extension arm as claimed in either of claims 1 and 2, **characterized in that** the coupling (38, 38a) is designed as a toothed coupling, the latter having at least one tooth element in one coupling part (40, 40a) and at least two recesses in the opposite coupling part (42, 42a).

4. The extension arm as claimed in either of claims 1 and 2, **characterized in that** the coupling (38) is configured as a friction coupling.

5. The extension arm as claimed in one of claims 1 to 4, **characterized in that** the first coupling part (40, 40a) is connected directly or indirectly to the extension arm (6, 6a).

6. The extension arm as claimed in one of claims 1 to 5, **characterized in that** one of the coupling parts (40, 40a, 42, 42a) has a sleeve part (60, 62) surrounding the coupling region and/or a spring region.

7. The extension arm as claimed in one of claims 1 to 6, **characterized in that** the extension arm (6, 6a) is arranged in a manner such that it can rotate about its axis (18) on a carrying element (30, 30a), and the carrying element is connected via a joint (10) to a slide (8) which can be moved and retained along the carrier (4).

8. The extension arm as claimed in one of claims 1 to 7, **characterized in that** the supporting element (56, 56a) is arranged on an upper arm of the guide rod (20, 20a) and has a stop lug which is connected in a sliding manner to the counterpart (58, 58a) on the extension arm (6, 6a), the second coupling part (42, 42a) being preloaded against the first coupling part (40, 40a) by means of a preloading spring (54, 54a).

9. The extension arm as claimed in claim 8, **characterized in that** the supporting element (56) is designed as a one- or two-sided eccentric.

10. The extension arm as claimed in claim 9, **characterized in that** the preloading spring (54) is arranged in the interior of the sleeve-like, second coupling part (42) and is supported at one end on the coupling part (42) and at the other end on the extension arm (6).

11. The extension arm as claimed in one of claims 1 to 8, **characterized in that** the supporting element (56a) is arranged on an upper arm of the guide rod (20a) and is connected via a joint (64) to the counterpart (66) which is arranged in a manner such that it can pivot about the extension-arm axis (18).

12. The extension arm as claimed in one of claims 1 to 11, **characterized in that** the guide rod (20, 20a) has a retaining device (24) in its lower section and can be retained on the carrier (4), which is preferably designed as a pole, by means of a retaining element (76, 106).

13. The extension arm as claimed in claim 12, **characterized in that** the retaining element (106) is designed as a resilient retaining clip.

14. The extension arm as claimed in claim 12 or 13, **characterized in that** the retaining element (76, 106) is connected to the guide rod (20, 20a) in an articulated manner.

15. The extension arm as claimed in claim 12, **characterized in that** the retaining element (76) is designed as a retaining lug (76) which engages in a longitudinal slot (94) arranged on the pole (4).

16. The extension arm as claimed in claim 15, **characterized in that** the retaining lug (76) has two lug parts (82, 84) which are arranged at a distance from each other and engage on side parts (90, 92) of the longitudinal slot (94) in a retaining manner.

17. The extension arm as claimed in claim 16, **characterized in that** the lug parts (82, 84) are resilient.

18. The extension arm as claimed in either of claims 16 and 17, **characterized in that** the lug parts (82, 84) are secured against becoming unlatched from the longitudinal slot (94) by means of an insertable blocking slider (96).

## Revendications

1. Bras (6, 6a) de parasol à bras libre, monté pivotant autour de son axe (18) sur un support (4),
le bras se pivotant à l'aide d'une barre de guidage (20, 20a) et se bloquant en position pivotée,
la barre de guidage étant montée sur un manchon (44, 44a) pivotant autour du bras, et pouvant d'une part s'accrocher dans différentes positions angulaires de pivotement avec le bras (6, 6a) et d'autre part, se bloquer directement ou indirectement au support (4),
**caractérisé en ce qu'**
une première pièce d'accouplement (40, 40a) est reliée solidairement au bras et coopère axialement avec une seconde pièce d'accouplement (42, 42a) réalisée sur le manchon (44, 44a),
la barre de guidage (20, 20a) ayant un organe d'appui (56, 56a) coopérant avec une pièce complémentaire (58, 66) prévue sur le bras (6, 6a) pour coulisser dans la direction axiale autour de la seconde pièce d'accouplement (42, 42a) à l'aide de la barre de guidage (20, 20a).

2. Bras selon la revendication 1,
**caractérisé en ce que**
la barre de guidage (20, 20a) comporte une pièce en forme de fourche (46) par laquelle elle est articulée à la seconde pièce de couplage (42, 42a) par deux tourillons de palier (48).

3. Bras selon la revendication 1 ou 2,
**caractérisé en ce que**
l'embrayage (38, 38a) est un embrayage à griffes ayant au moins un élément de dent sur une pièce d'accouplement (40, 40a) et au moins deux intervalles de dent dans la pièce d'accouplement (42, 42a) complémentaire.

4. Bras selon la revendication 1 ou 2,
**caractérisé en ce que**
l'embrayage (38) est un embrayage à friction.

5. Bras selon les revendications 1 à 4,
**caractérisé en ce que**
la première pièce d'accouplement (40, 40a) est reliée directement ou indirectement au bras (6, 6a).

6. Bras selon les revendications 1 à 5,
**caractérisé en ce que**
l'une des pièces d'accouplement (40, 40a, 42, 42a) comporte une pièce en forme de manchon (60, 62) entourant la zone d'accouplement et/ou une zone de ressort.

7. Bras selon les revendications 1 à 6,
**caractérisé en ce que**
le bras (6, 6a) est monté pivotant autour de son axe (18) sur un organe de support (30, 30a) et l'organe de support est relié par une articulation (10) à un chariot (8) coulissant le long du support (4) et pouvant se bloquer sur celui-ci.

8. Bras selon les revendications 1 à 7,
**caractérisé en ce que**
l'organe d'appui (56, 56a) est prévu sur le bras supérieur de la barre de guidage (20, 20a) et comporte un bec de butée coopérant en coulissement avec la pièce complémentaire (58, 58a) du bras (6, 6a),
la seconde pièce d'accouplement (42, 42a) étant précontrainte par un ressort de précontrainte (54, 54a) contre la première pièce d'accouplement (40, 40a).

9. Bras selon la revendication 8,
**caractérisé en ce que**
l'organe d'appui (56) est réalisé sous la forme d'un excentrique à un ou deux côtés.

10. Bras selon la revendication 9,
**caractérisé en ce que**
le ressort de précontrainte (54) est logé dans la seconde pièce d'accouplement (42) en forme de manchon et s'appuie par une extrémité contre la pièce d'accouplement (42) et par l'autre extrémité contre le bras (6).

11. Bras selon les revendications 1 à 8,
**caractérisé en ce que**
l'organe d'appui (56a) est prévu sur le bras supérieur de la barre de guidage (20a) et est relié par une articulation (64) à la pièce complémentaire (66), cette dernière pivotant autour de l'axe (18) du bras.

12. Bras selon les revendications 1 à 11,
**caractérisé en ce que**
la barre de guidage (20, 20a) comporte dans son segment inférieur, un dispositif de blocage (24) pour se bloquer au support (4) de préférence en forme de mât, par l'intermédiaire d'un organe de blocage (76, 106).

13. Bras selon la revendication 12,
**caractérisé en ce que**
l'organe de blocage (106) est un organe élastique de blocage par enclipsage.

14. Bras selon la revendication 12 ou 13,
**caractérisé en ce que**
l'organe de blocage (76, 106) est relié de manière articulée à la barre de guidage (20, 20a).

15. Bras selon la revendication 12,
**caractérisé en ce que**
l'organe de blocage (76) est réalisé sous la forme d'un bec de blocage (76) pénétrant dans une fente longitudinale (94) du mât (4).

16. Bras selon la revendication 15,
**caractérisé en ce que**
le bec de blocage (76) comporte des parties de bec (82, 84) écartées l'une de l'autre et qui coopèrent dans le sens du blocage avec des parties latérales (90, 92) de la fente longitudinale (94).

17. Bras selon la revendication 16,
**caractérisé en ce que**
les parties de bec (82, 84) sont élastiques.

18. Bras selon la revendication 16 ou 17,
**caractérisé en ce que**
les parties de bec (82, 84) sont fixes contre le décrochage hors de la fente longitudinale (94) par l'intermédiaire d'un tiroir de verrouillage (96).
